# EUROPEAN PATENT APPLICATION

(11) **EP 2 746 036 A1**
(43) Date of publication of application: **25.06.2014**
(21) Application number: 12825731.8
(22) Date of filing: 13.08.2012
(51) Int. Cl.: B29D 30/56, B60C 1/00, B60C 11/02, C08J 5/12

(54) **TIRE, METHOD FOR MANUFACTURING SAME, AND RUBBER MEMBER FOR REPAIR USED IN SAME TIRE MANUFACTURING METHOD**

(30) Priority: 19.08.2011 JP 2011179905
(71) Applicant: Bridgestone Corporation, Tokyo 104-8340 (JP)
(72) Inventor: FUJIKI, Kumi, Kodaira-shi Tokyo 187-8531 (JP); TAKANO, Kosuke, Kodaira-shi Tokyo 187-8531 (JP)
(74) Representative: Waldren, Robin Michael
(86) International application number: PCT/JP2012/005137
(87) International publication number: WO 2013/027371

(57) **Abstract**

The present invention provides a tire that can achieve vulcanization at low temperatures and in a short time, and has high peeling resistance, a method for manufacturing thereof, and a rubber member for repair used in the method for manufacturing the tire. The method for manufacturing a tire of the present invention is a method for manufacturing a tire by adhering an adherend tire member and a tire member through a rubber composition for adhesion, the method comprising using an unvulcanized rubber composition containing, per 100 parts by mass of a rubber component, 0.1 parts by mass to 4.0 parts by mass of xanthate based compound, and 0.1 parts by mass to 5.0 parts by mass of sulfur as the rubber composition for adhesion.

## Description

### TECHNICAL FIELD

The present invention relates to a tire, a method for manufacturing thereof, and a rubber member for repair used in the method for manufacturing the tire, in particular, to a tire that can achieve vulcanization at low temperatures and in a short time, and has high peeling resistance, a method for manufacturing thereof, and a rubber member for repair used in the method for manufacturing the tire.

### BACKGROUND ART

Conventionally, there has been known, as one of the representative methods of manufacturing a retreaded tire, a method of buffing a tread surface of a worn-out tire that has outlived its primary life (hereinafter, referred to as "base tire") and attaching, onto the buffed surface, a retreaded tread rubber portion (precured tread) which has been vulcanized in advance. This method is called a cold process or a precure method, etc., and it is differentiated from a hot process in which unvulcanized tread rubber is placed on a base tire and then mold-vulcanization is performed.

In the above mentioned cold process, the generally employed method is a method where unvulcanized cushion rubber is first attached onto the base tire, and then precured tread is further attached onto the cushion rubber, and then heating in a vulcanizer at temperatures of 110 to 140°C for 2 to 3 hours is performed, in order to adhere the base tire and the precured tread to each other. The cushion rubber used in this method flows into the buff flaws of the base tire, smoothes the adhesion surface, and serves a function for ensuring adhesiveness between the precured tread and the base tire by subjecting both of the base tire and the precured tread to covulcanization . Therefore, the cushion rubber is in a position between the base tire and the precured tread, which is, a portion where stress concentrates. For this reason, the adhesiveness/ destruction resistance of this portion becomes a key in ensuring durability of the retreaded tire (meaning that peeling of the precured tread from the base tire will hardly be caused) when actually using the retreaded tire. Therefore, the cushion rubber needs to have a destruction resistance equal to or higher than those of the surface layer rubber of the base tire and the precured tread rubber.

In the vulcanization of such cold process, consideration needs to be made so that the vulcanized base tire does not become over-vulcanized due to re-heating, and therefore, rubber that can be vulcanized and adhered at a relatively low temperature and in a short time is required for a cushion rubber composition disposed between the base tire and the precured tread. Generally employed methods as compounding means for accelerating the vulcanization rate include a method of increasing the amount of sulfur or vulcanization accelerator, or a method of utilizing a so-called ultra-accelerator such as dithiocarbamate based compound as a vulcanization accelerator.

For example, as a compounding means for accelerating the vulcanization rate of rubber, there is a method of using a composition containing benzothiazyl disulfide or mercaptobenzothiazole/ tetrabenzylthiuram disulfide or zinc dibenzyldithiocarbamate/ amine activator for curing, and performing vulcanization at a temperature of 95 °C to 140 °C (e.g. See Patent Document 1).

However, in this method, there is a problem that it is not possible to sufficiently increase the vulcanization rate (e.g. vulcanization time t₉₉ (heating time required for achieving a crosslinking progress degree of 0.99) at a vulcanization temperature of 110 °C is 18.6 minutes to 44.8 minutes), and a vulcanization time of 2 hours at 110 °C is required as a tire.

Further, as a compounding means for accelerating the vulcanization rate of rubber, there is a vulcanizing method using compositions containing tetrabenzylthiuram disulfide/ 2-mercaptobenzothiazole/ diphenylguanidine/ 1,6-hexamethylene-sodium dithiosulfate dehydrate, or 3-hydroxy-N-(1,3-dimethylbutylidene)-2-naphthoic acid hydrazide (e.g. See Patent Document 2).

However, in this method, there is a problem that it is not possible to sufficiently increase the vulcanization rate (e.g. vulcanization time t₉₀ (time required for achieving 90 % of the maximum value of the vulcanization torque curve) at a vulcanization temperature of 120 °C is 9 minutes to 13 minutes).

Further, there is a vulcanizing method using a composition containing tetra (n-dodecyl) thiuram disulfide/2-mercaptobenzothiazole/ diphenylguanidine, or a composition containing tetra(2-ethylhexyl) thiuram disulfide/ 2-mercaptobenzothiazole, zinc salts of 2-mercaptobenzothiazole or amine salts of 2-mercaptobenzothiazole/ diphenylguanidine as compounding means to accelerate the vulcanization rate of rubber (e.g. See Patent Document 3).

However, in this method, there is a problem that it is not possible to sufficiently increase the vulcanization rate (e.g. vulcanization time at a vulcanization temperature of 120 °C is 13.8 minutes to 16.3 minutes).

### CITATION LIST

### Patent Literature

PTL 1: JP 3565954 B
PTL 2: JP 2002-69236 A
PTL 3: JP 2002-356102 A

### SUMMARY OF INVENTION

### (Technical Problem)

In view of the above, an object of the present invention is to provide a tire that can achieve vulcanization at even lower temperatures and in a shorter time compared to conventional technology and has high peeling resistance, a method for manufacturing thereof, and a rubber member for repair used in the method for manufacturing the tire.

### (Solution to Problem)

The inventors of the present invention found that in a method for manufacturing a tire, it is possible to achieve vulcanization at low temperatures and in a short time, and attain high peeling resistance by adding a xanthate based compound to a rubber composition, to thereby complete the present invention.

By achieving vulcanization at low temperatures and in a short time, deterioration (damages) of the base tire will be reduced.

Specifically, the method for manufacturing the tire of the present invention is a method for manufacturing a tire by adhering an adherend tire member and a tire member through a rubber composition for adhesion wherein an unvulcanized rubber composition containing, per 100 parts by mass of a rubber component, 0.1 parts by mass to 4.0 parts by mass of xanthate based compound, and 0.1 parts by mass to 5.0 parts by mass of sulfur is used as the rubber composition for adhesion.

In the method for manufacturing a tire of the present invention, the unvulcanized rubber composition preferably further includes, per 100 parts by mass of the rubber component, 25 parts by mass to 50 parts by mass of carbon black.

In the method for manufacturing a tire of the present invention, the adherend tire member and the tire member are preferably vulcanized rubbers.

The tire according to the present invention is manufactured by the method for manufacturing a tire of the present invention.

The rubber member for repair of the present invention is used in the method for manufacturing a tire of the present invention.

### (Advantageous Effect of Invention)

According to the present invention, it is possible to provide a tire that can achieve vulcanization at even lower temperatures and in a shorter time compared to conventional technology and has high peeling resistance, a method for manufacturing thereof, and a rubber member for repair used in the method for manufacturing the tire.

### DESCRIPTION OF EMBODIMENTS

### (Method for manufacturing a tire)

The method for manufacturing a tire of the present invention comprises at least an adhesion step, and further comprises an inspection step, a buffing step, a precured tread vulcanization step, a cutting step, a tread winding step, and other steps that are selected as appropriate when necessary.

### <Adhesion Step>

The adhesion step is a step for adhering an adherend tire member and a tire member through a rubber composition for adhesion.

The heating temperature in the adhesion step (at the time of vulcanization) is not particularly limited, and may be selected as appropriate depending on the application thereof. The heating temperature is preferably 120 °C or lower, more preferably 105 °C or lower.

If the heating temperature is higher than 120 °C, vulcanization of the rubber composition for adhesion becomes too fast and causes vulcanization to occur before the rubber composition for adhesion properly permeates into the adherend tire member and the tire member. As a result, sufficient peeling resistance cannot be achieved.

The vulcanization time in the adhesion step (at the time of vulcanization) is not particularly limited, and it is adjusted as appropriate depending on the combination, vulcanization temperature, tire size, vulcanization facility, etc.

The pressure in the adhesion step (at the time of vulcanization) is not particularly limited, and it is adjusted as appropriate depending on the combination, vulcanization temperature, tire size, vulcanization facility, etc.

### <<Adherend Tire Member>

The adherend tire member is not particularly limited, and may be selected as appropriate depending on the application thereof. Examples include a base tire.

The rubber material for the adherend tire member is not particularly limited, and may be selected as appropriate depending on the application thereof. For example, the rubber material may be any one of a vulcanized rubber, a semi-vulcanized rubber, and an unvulcanized rubber. If the adherend tire member is a base tire, the rubber material is usually a vulcanized rubber.

Here, the vulcanized rubber is a material obtained by combining sulfur, sulfur compound and the like with polymer and forming various sulfur cross linkings such as a monosulfide bond, a disulfide bond, a polysulfide bond between main carbon chains to thereby exhibit rubber elasticity.

The unvulcanized rubber is a concept that includes a wide variety of rubber in a state before undergoing cross linking reaction, regardless of whether it is a natural rubber or a synthetic rubber.

The semi-vulcanized rubber is a concept that includes rubber in a state where cross linking reaction has proceeded compared to an unvulcanized rubber, by heating an unvulcanized rubber.

### «Tire Member»

The tire member is not particularly limited, and may be selected as appropriate depending on the application thereof. Examples include a tread, a base tread, and a sidewall. These tire members may be used alone or in combination of two or more.

Among these, the tread is preferred from the viewpoint that it enables replacement of portions with large amounts of abrasion loss.

The rubber material for the tire member is not particularly limited, and may be selected as appropriate depending on the application thereof. For example, the rubber material may be any one of a vulcanized rubber, a semi-vulcanized rubber, and an unvulcanized rubber. A tread rubber (vulcanized rubber) which has been vulcanized in advance is usually used for retreaded tires obtained through the cold process where cushion rubber for adhesion is used. By doing so, it is possible to perform vulcanization adhesion for a plurality of tires at once in a vulcanizer, and therefore it is efficient and economical compared to the hot process which requires a mold vulcanizing machine.

### «Combination of Adherend Tire Member and Tire Member»

The combination of the adherend tire member and the tire member is not particularly limited, and may be selected as appropriate depending on the application thereof. The adherend tire member and the tire member are both preferably a vulcanized rubber, from the viewpoint that vulcanization of a rubber composition for adhesion (cushion rubber) discussed later can be performed without considering the vulcanization rates of the adherend tire member and the tire member.

### «Rubber Composition for Adhesion»

The rubber composition for adhesion (cushion rubber composition) is an unvulcanized rubber composition containing at least a rubber component, a xanthate based compound, and sulfur, and further contains a reinforcing filler, and other components when necessary.

The vulcanization rate (T₉₀) of the rubber composition for adhesion at a temperature of 105 °C is not particularly limited as long as the rate is faster than the vulcanization rate of the conventional rubber composition for adhesion (i.e. as long as the time (T₉₀) until the torque value F of the vulcanization torque curve reaches a predetermined value is short), and may be selected as appropriate depending on the application thereof. The vulcanization rate is preferably 40 minutes or shorter.

### -Rubber Component-

The rubber component is not particularly limited, and may be selected as appropriate depending on the application thereof. Examples include: diene based rubbers such as a natural rubber, various types of butadiene rubbers, various types of styrene-butadiene copolymer rubbers, an isoprene rubber, a butyl rubber, a halogenated butyl rubber, an acrylonitrile-butadiene rubber, a chloroprene rubber, an ethylene-propylene-diene copolymer rubber, a styrene-isoprene copolymer rubber, a styrene-isoprene-butadiene copolymer rubber, an isoprene-butadiene copolymer rubber; a bromide of a copolymer of isobutylene and p-methylstyrene; an ethylene-propylene copolymer rubber; a chlorosulfonated polyethylene; an acrylic rubber; an epichlorohydrin rubber; a polysulfide rubber; a silicone rubber; a fluororubber; and an urethane rubber. These rubber components may be selected as appropriate in order to obtain high adhesiveness, depending on the content of the composition of rubber of the adherend tire member and the tire member. Further, they may be used alone or in combination of two or more.

Among these rubber components, the natural rubber is preferred from the viewpoint of tackiness, adhesiveness between the adherend tire member and the tire member, and ease of attaching to the adherend tire member.

### -Xanthate based Compound-

The xanthate based compound was added as a vulcanization accelerator.

The xanthate based compound is a xanthogenate having a chemical structural formula of -OC(=S)-S-, and derivative thereof.

The examples of the xanthate based compound is not particularly limited and may be selected as appropriate depending on the application thereof. Specific examples include sodium isopropylxanthate, zinc ethylxanthate, zinc isopropylxanthate, zinc dibutylxanthate, dibutylxanthogen disulfide. These xanthate compounds may be used alone or in combination of two or more.

Among these xanthate compounds, zinc isopropylxanthate is preferred from the viewpoint that maximum torque can be obtained in the vulcanization curve, and the degree of elasticity after vulcanization is high, and vulcanization can be performed efficiently.

If the xanthate based compound is used as the vulcanization accelerator, sulfur crosslinking reaction can be accelerated at a lower temperature compared to conventional accelerators, and therefore vulcanization at low temperatures and in a short time, as well as high peeling resistance can be achieved.

The content of the xanthate based compound is not particularly limited as long as it is 0.1 parts by mass to 4.0 parts by mass per 100 parts by mass of the rubber component, and may be selected as appropriate depending on the application thereof. The content thereof is preferably 0.5 parts by mass to 3.5 parts by mass, more preferably 1.0 parts by mass to 3.0 parts by mass, particularly preferably 1.0 parts by mass to 2.0 parts by mass.

If the content of the xanthate based compound is less than 0.1 parts by mass, effects of the present invention cannot be obtained, and if the content thereof exceeds 4.0 parts by mass, premature vulcanization occurs and adhesion strength (peeling strength) as well as workability decreases.

### -Vulcanization Accelerators other than Xanthate based Compound-

A rubber composition for adhesion may include a vulcanization accelerator other than a xanthate based compound, in addition to a xanthate based compound.

The vulcanization accelerator other than the xanthate based compound is not particularly limited, and examples thereof include a guanidine based compound, an aldehyde-amine based compound, an aldehyde-ammonia based compound, a thiazole based compound, a sulfenamide based compound, a thiourea based compound, a thiuram based compound, and a dithiocarbamate based compound. These vulcanization accelerators may be selected as appropriate in order to adjust scorch time and vulcanization rate, while taking into consideration of the costs of combinations and the safety of the accelerator, etc., within the scope of claims of the present Patent application, depending on the content of the composition of rubber of the adherend tire member and the tire member, and the kneading machine for kneading cushion rubber, and the extruder or the rolling roll for processing unvulcanized cushion rubber into a form of a sheet, and processors such as a vulcanizer. Further, they may be used alone or in combination of two or more.

Among these vulcanization accelerators, from the viewpoint that the vulcanization rate can be accelerated, preferred is at least either one of the guanidine based compound, the aldehyde-amine based compound, and the aldehyde-ammonia based compound, and more preferred is the aldehyde-amine based compound.

### --Guanidine based Compound--

The guanidine based compound is not particularly limited, and may be selected as appropriate depending on the application thereof. Examples include 1,3-diphenylguanidine.

### --Aldehyde-Amine based Compound--

The aldehyde-amine based compound is not particularly limited, and may be selected as appropriate depending on the application thereof. Examples include n-butyl aldehyde aniline.

### --Aldehyde-Ammonia based Compound--

The aldehyde-ammonia based compound is not particularly limited, and may be selected as appropriate depending on the application thereof.

### --Thiazole based Compound--

The thiazole based compound is not particularly limited, and may be selected as appropriate depending on the application thereof. Examples include 2-mercaptobenzothiazole.

### --Sulfenamide based Compound--

The sulfenamide based compound is not particularly limited, and may be selected as appropriate depending on the application thereof.

### --Thiourea based Compound--

The thiourea based compound is not particularly limited, and may be selected as appropriate depending on the application thereof.

### --Thiuram based Compound--

The thiuram based compound is not particularly limited, and may be selected as appropriate depending on the application thereof.

### --Dithiocarbamate based Compound--

The dithiocarbamate based compound is not particularly limited, and may be selected as appropriate depending on the application thereof. Examples include zinc dibenzyldithiocarbamate.

### -Vulcanization Retardant (Retarder)-

A vulcanization retardant (retarder) may be contained in order to prevent scorch and improve storage stability of unvulcanized cushion rubber. A retarder may be selected as appropriate from organic acids such as salicylic acid, benzoic acid, phthalic anhydride, etc., and N-nitrosodiphenylamine, N-cyclohexylthiophthalimide, N-phenyl-N-(trichloromethylsulfenyl)-benzene-sulfonamide. Further, these vulcanization retardants may be used alone or in combination of two or more.

### -Sufur-

The content of the sulfur is not particularly limited as long as it is 0.1 parts by mass to 5.0 parts by mass per 100 parts by mass of the rubber component, and may be selected as appropriate depending on the application thereof. The content thereof is preferably 0.5 parts by mass to 3.0 parts by mass, and more preferably 2.0 parts by mass to 3.0 parts by mass.

If the content is less than 0.1 parts by mass, effects of the present invention cannot be obtained, and if the content exceeds 5.0 parts by mass, vulcanization becomes too fast, and therefore adhesion strength (peeling strength) and workability decreases, and tackiness of unvulcanized cushion rubber decreases due to sulfur bloom. On the other hand, if the content is within a particularly preferable range, it is advantageous from the viewpoint of adhesion strength (peeling strength) and workability. As sulfur, normal sulfur, or insoluble sulfur for preventing blooms may be used.

### -Reinforcing Filler-

The rubber composition may contain a reinforcing filler when necessary. Examples of the reinforcing filler include a carbon black and an inorganic filler, and the reinforcing filler is preferably at least one type selected from the carbon black and the inorganic filler.

The content of the reinforcing filler is not particularly limited, and may be selected as appropriate depending on the application thereof. The content thereof per 100 parts by mass of the rubber component is preferably 10 parts by mass to 80 parts by mass, more preferably 25 parts by mass to 50 parts by mass, and particularly preferably 30 parts by mass to 40 parts by mass.

If the content of the reinforcing filler is less than 10 parts by mass, there may not be much effect attained by adding the reinforcing filler. Alternatively, if the content exceeds 80 parts by mass, workability may decrease because viscosity of the rubber component at an unvulcanized state becomes too high, and sufficient adhesion strength may not be obtained because adhesion to the rubber of the adherend tire member and the tire member decreases.

### -Inorganic Filler-

The inorganic filler is not particularly limited, and may be selected as appropriate depending on the application thereof. Examples include silica, aluminum hydroxide, clay, alumina, talc, mica, kaolin, glass balloon, glass beads, calcium carbonate, magnesium carbonate, magnesium hydroxide, calcium carbonate, magnesium oxide, titanium oxide, potassium titanate, and barium sulfate. These inorganic fillers may be used alone or in combination of two or more.

When using an inorganic filler, a silane coupling agent may be used as appropriate.

### --Carbon Black--

The carbon black may be selected as appropriate depending on the application thereof. Examples include those of HAF, FF, FEF, GPF, SRF and FT grades. These carbon blacks may be used alone or in combination of two or more.

Among these, the HAF grade is advantageous from the viewpoint that it enhances crack growth resistance, inhibits heat build-up, has good workability, and it is low in cost.

The content of the carbon black per 100 parts by mass of the rubber component is not particularly limited, and may be selected as appropriate depending on the application thereof. The content thereof is preferably 25 parts by mass to 50 parts by mass, and more preferably 30 parts by mass to 40 parts by mass.

If the content of the carbon black per 100 parts by mass of the rubber component is less than 25 parts by mass, sufficient reinforcing effect may not be obtained, and if the content thereof exceeds 50 parts by mass, the rubber composition may become too hard.

### -Other Components-

Further, if necessary, known agents such as a tackiness agent (tackifier), a reinforcing agent, a softening agent, a filler, a vulcanizing aid, a colorant, a flame retardant, a lubricant, a foaming agent, a plasticizer, a processing aid, an antioxidant, an age resister, an ultraviolet rays protecting agent, an antistatic agent, a color protecting agent, and other compounding agents may be used depending on the intended use thereof.

### <Inspection Step>

The inspection step is a step for inspecting appearance, nail holes, flaws of a tire for retreading in order to obtain a base tire as the adherend tire member.

In the inspection step, a determination is made as to whether the tire may be regenerated by retreading, and tires determined as not possible to regenerate will be excluded.

### <Buffing Step>

The buffing step is a step for forming a base tire by scraping off the peripheral surface of the tread of a tire for retreading that may be regenerated.

Repairing such as partial polishing or hole filling is performed on the base tire.

### <Precured Tread Vulcanization Step>

The precured tread vulcanization step is a step for vulcanizing and molding a tread with patterns from tread rubber material to obtain a precured tread as the tire member.

### <Cutting Step>

The cutting step is a step for cutting the precured tread as the tire member continuing in the form of a belt into a prescribed length.

### <Tread Winding Step>

The tread winding step is a step for winding a precured tread as the tire member to a base tire as the adherend tire member. When winding the precured tread, cushion rubber in the form of a sheet is pasted in advance by applying cement on the peripheral surface of the base tire, or cushion rubber in the form of a sheet is directly subjected on the base tire from an extruder in advance.

For example, such base tire is rotatably supported, and the precured tread is fed to the rotating base tire by a feeding apparatus and wound around the peripheral surface of the base tire.

The front end and the rear end of the precured tread wound around the base tire are brought into contact through the cushion rubber, and joined by a stapler or the like.

### <Other Steps>

The other steps are not particularly limited, and may be selected as appropriate depending on the application thereof. Examples include a manufacturing process of cushion rubber.

### «Manufacturing Process of Cushion Rubber»

The manufacturing process of cushion rubber is a process for manufacturing cushion rubber using the rubber composition for adhesion.

The manufacturing method of the cushion rubber is not particularly limited, and may be selected as appropriate depending on the application thereof. Examples include a method of forming a sheet using a rolling roll, and a method of forming a sheet using an extruder.

The shape of the cushion rubber is not particularly limited, and may be selected as appropriate depending on the application thereof. Examples include a form of a sheet.

### (Tire)

The tire of the present invention is not particularly limited as long as it is manufactured by the method for manufacturing a tire of the present invention, and may be selected as appropriate depending on the application thereof.

The shape, structure, size and material of the tire of the present invention are not particularly limited, and may be selected as appropriate depending on the application thereof.

### (Rubber Member for Repair)

The rubber member for repair of the present invention is not particularly limited as long as it is used in the tire of the present invention, and may be selected as appropriate depending on the application thereof. Examples include a tread, a base tread, and a sidewall. These rubber members for repair may be used alone or in combination of two or more.

The rubber material of the tire member is not particularly limited, and may be selected as appropriate depending on the application thereof. For example, the rubber material may be any one of a vulcanized rubber, a semi-vulcanized rubber, and an unvulcanized rubber. A tread rubber (vulcanized rubber) which has been vulcanized in advance is usually used for retreaded tires obtained through the cold process where cushion rubber for adhesion is used. By doing so, it is possible to perform vulcanization adhesion for a plurality of tires at once in a vulcanizer, and therefore the cold process is efficient and economical compared to the hot process which requires a mold vulcanizing machine.

The shape, structure, and size of the rubber member for repair of the present invention are not particularly limited as long as it is possible to adhere the adherend tire member with the tire member, and may be selected as appropriate depending on the application thereof.

The material of the rubber member for repair of the present invention is not particularly limited as long as it is formed by a rubber composition for adhesion used in the method for manufacturing a tire of the present invention, and may be selected as appropriate depending on the application thereof.

### EXAMPLES

In the following, the present invention will be described in further detail with reference to examples thereof. However, the present invention is no way limited to the following examples.

### (Examples 1 to 6, and Comparative Examples 1 to 5)

Rubber compositions were prepared by the compounding compositions shown in the following tables 1-1 to 1-2. Regarding kneading, first, all materials other than a vulcanization accelerator and sulfur were kneaded using a Banbury mixer with a capacity of 3.0 L with the rotor rotation number set to 70rpm and the temperature during ejection set to 150 °C. The obtained rubber was once cooled to room temperature and then kneaded at 50rpm at a temperature during ejection of 65 °C or lower. Measurements for each of the obtained rubber compositions were made for Fmax (maximum torque)(dN·m) and Fmin (minimum torque)(dN·m) at 105 °C, as well as vulcanization rate T₉₀ at 105 °C, by the following method. The results are shown in Tables 1-1 to 1-2.

### <Fmax (Maximum Torque) and Fmin (Minimum Torque)>

As for the maximum torque Fmax, the maximum value of the vulcanization torque curve was measured using a curelastometer manufactured by Japan Synthetic Rubber Co., Ltd., at a temperature of 105 °C ± 1 °C.

### <Vulcanization Rate T₉₀>

As for the vulcanization rate T₉₀, the time required for the torque value F of the vulcanization torque curve to reach the value of [minimum torque Fmin+90%ΔF] was measured using a curelastometer manufactured by Japan Synthetic Rubber Co., Ltd. in accordance with JISK6300-2, at a temperature of 105 °C ± 1 °C. Here, ΔF = maximum torque Fmax - minimum torque Fmin.

### <Tensile Strength Measurement>

In order to prepare samples for tensile tests for each cushion rubber composition of tables 1-1 to 1-2, these compositions were made into a form of a sheet of 2mm using a vulcanizing press machine set to 105 °C and each sheet was vulcanized for twice the time of T₉₀. Tensile strength at break was measured by conducting a tensile test using a dumbbell-type test specimen in accordance with JISK6251. Further, the tensile strength of vulcanized rubber after aging for 24 hours in a thermostat at 100 °C was measured in the same way.

Further, prototypes of retreaded tires were manufactured with the following method, using cushion rubbers of comparative example 1 and examples 1 and 2 and peeling strength was measured for each prototype. The results are shown in Table 2-1.
Each retreaded tire was manufactured by the following process: A cushion rubber that was processed in advance into a form of a sheet with a thickness of 1mm by a roll was attached to the tread part of a base tire for retreading (a radial tire for trucks and buses, of size 11R22.5), and a precured tread was disposed on the cushion rubber, which in turn was wrapped with a rubber bag called an envelope, put into a vulcanizer at room temperature and pressurized and vulcanized in the vulcanizer to 6.0MPa in the vulcanizer with the maximum temperature set to 105 °C. Vulcanization was performed for 3.5 hours for comparative example 1, 2 hours for example 1, and 1 hour for example 2.

### <Peeling Strength Measuring Method (Peeling Testing Method)>

Samples for peeling test of the prototypes of the retreaded tire with a width of 1 inch between the precured tread/ cushion rubber and the base tire were manufactured and the peeling strength of the adhesion interface of the tread and the base tire was measured in accordance with JISK6256-1. The peeling strength of the testing samples collected from the retreaded tire of comparative example 1 is indexed as 100. The larger index shows a higher peeling strength.

**[Table 1-1]**

| Compounding Compositions (parts by mass) | Comparative Example 1 | Comparative Example 2 | Comparative Example 3 | Comparative Example 4 | Comparative Example 5 |
|---|---|---|---|---|---|
| Natural Rubber *1 | 100 | 100 | 100 | 100 | 100 |
| Carbon Black *2 | 35 | 35 | 35 | 35 | 20 |
| Oil *3 | 15 | 15 | 15 | 15 | 15 |
| Stearic Acid | 2 | 2 | 2 | 2 | 2 |
| Zinc Oxide | 3 | 3 | 3 | 3 | 3 |
| Age Resister *4 | 1 | 1 | 1 | 1 | 1 |
| Tackiness Agent (Tackifier) *5 | 2 | 2 | 2 | 2 | 2 |
| Vulcanization Accelerator | | | | | |
| Aldehyde-Amine based | 1.3 | 1.3 | 1.3 | 1.3 | 1.3 |
| Compound *6 | | | | | |
| Guanidine based | - | - | - | - | - |
| Compound *7 | | | | | |
| Xanthate based | - | - | 4.5 | 2 | 2 |
| Compound *8 | | | | | |
| Benzothiazole based | 1 | - | - | - | - |
| Accelerator *9 | | | | | |
| Dithiocarbamate based | 0.15 | - | - | - | - |
| Accelerator *10 | | | | | |
| Normal Sulfur | 2.5 | 2.5 | 2.5 | 0.05 | 5.5 |
| Curelastometer 105 ° C | | | | | |
| Fmax (Maximum Torque) (dN·m) | 6.5 | no vulcanization | burnt | no vulcanization | burnt |
| Fmin (Minimum Torque) (dN·m) | 1.34 | - | - | - | - |
| Vulcanization Rate T₉₀ (min.) (105 ° C) | 45 | - | - | - | - |
| Tensile Strength (MPa) | 25.1 | - | - | - | - |
| Tensile Strength After Aging (MPa) | 14.9 | - | - | - | - |

**[Table 1-2]**

| Compounding Compositions (parts by mass) | Example 1 | Example 2 | Example 3 | Example 4 | Example 5 | Example 6 |
|---|---|---|---|---|---|---|
| Natural Rubber *1 | 100 | 100 | 100 | 100 | 100 | 100 |
| Carbon Black *2 | 35 | 35 | 35 | 35 | 20 | 55 |
| Oil *3 | 15 | 15 | 15 | 15 | 8 | 20 |
| Stearic Acid | 2 | 2 | 2 | 2 | 2 | 2 |
| Zinc Oxide | 3 | 3 | 3 | 3 | 3 | 3 |
| Age Resister *4 | 1 | 1 | 1 | 1 | 1 | 1 |
| Tackiness Agent (Tackifier) *5 | 2 | 2 | 2 | 2 | 2 | 2 |
| Vulcanization Accelerator | | | | | | |
| Aldehyde-Amine based | - | 1.3 | 0.7 | 1.3 | 1.3 | 1.3 |
| Compound *6 | | | | | | |
| Guanidine based | - | - | 0.6 | - | - | - |
| Compound *7 | | | | | | |
| Xanthate based | 2 | 2 | 2 | 1 | 2 | 2 |
| Compound *8 | | | | | | |
| Benzothiazole based | - | - | - | - | - | - |
| Accelerator *9 | | | | | | |
| Dithiocarbamate based | - | - | - | 1.8 | - | - |
| Accelerator *10 | | | | | | |
| Normal Sulfur | 2.5 | 2.5 | 2.5 | 2.5 | 2.5 | 2.5 |
| Curelastometer 105 ° C | | | | | | |
| Fmax (Maximum Torque) (dN·m) | 6.9 | 9.0 | 6.5 | 8.4 | 8.1 | 9.8 |
| Fmin (Minimum Torque) (dN·m) | 1.52 | 1.56 | 1.54 | 1.55 | 1.30 | 1.80 |
| Vulcanization Rate T₉₀ (min.) (105 ° C) | 23 | 7 | 10 | 18 | 7 | 6 |
| Tensile Strength (MPa) | 25.0 | 24.8 | 24.9 | 25 | 23.8 | 26.8 |
| Tensile Strength After Aging (MPa) | 19.8 | 19.9 | 14.2 | 19.7 | 18.5 | 22.2 |

| | | | | | | |
|---|---|---|---|---|---|---|
| *1 to *10 of tables 1-1 to 1-2 are as follows. *1 RSS#4 *2 Carbon Black N330 of HAF grade, trade name: "DIABLACK H", manufactured by Mitsubishi Chemical Corporation *3 Spindle oil *4 Trade name: "NOCRAC 6C", manufactured by Ouchi Shinko Chemical Industrial Co., Ltd., N-Phenyl-N'-(1,3-dimethylbutyl)-p-phenylenediamine *5 Alkylphenol based tackiness agent (tackifier), trade name: SP1068, manufactured by SI Group, Inc. *6 Trade name: "NOCCELER 8" (n-butylaldehydeaniline), manufactured by Ouchi Shinko Chemical Industrial Co., Ltd. *7 Trade name: "NOCCELER D" (1,3-diphenylguanidine), manufactured by Ouchi Shinko Chemical Industrial Co., Ltd. *8 Trade name: "NOCCELER ZIX" (zinc isopropylxanthate), manufactured by Ouchi Shinko Chemical Industrial Co., Ltd. *9 Trade name: "NOCCELER M-P" (2-mercaptobenzothiazole), manufactured by Ouchi Shinko Chemical Industrial Co., Ltd. *10 Trade name: "NOCCELER ZTC" (zinc dibenzyldithiocarbamate), manufactured by Ouchi Shinko Chemical Industrial Co., Ltd. | | | | | | |

**[Table 2-1]**

| Cushion Rubber Used | Comparative Example 1 | Example 1 | Example 2 |
|---|---|---|---|
| Prototype of Tire | | | |
| Vulcanization Time (vulcanizer set to 105 ° C) (time) | 3.5 | 2 | 1 |
| Peeling Strength (the Comparative Example is indexed as 100) | 100 | 103 | 103 |

It can be seen from tables 1-1 to 1-2 that examples 1 to 6 where an unvulcanized rubber composition containing, per 100 parts by mass of the rubber component, 0.1 parts by mass to 4.0 parts by mass of xanthate based compound, and 0.1 parts by mass to 5.0 parts by mass of sulfur is used enables achieving vulcanization in a shorter time compared to comparative examples 1 to 5 where the above mentioned unvulcanized rubber composition is not used.

It can be seen from table 2-1 that examples 1 and 2 where the above mentioned unvulcanized rubber composition is used enables manufacturing a tire with higher peeling resistance compared to comparative example 1 where the above mentioned unvulcanized rubber composition is not used.

### INDUSTRIAL APPLICABILITY

The method for manufacturing a tire of the present invention can be suitably used particularly for manufacturing a retreaded tire.

## Claims

1. A method for manufacturing a tire by adhering an adherend tire member and a tire member through a rubber composition for adhesion, the method comprising using:
an unvulcanized rubber composition containing, per 100 parts by mass of a rubber component, 0.1 parts by mass to 4.0 parts by mass of xanthate based compound and 0.1 parts by mass to 5.0 parts by mass of sulfur, as the rubber composition for adhesion.

2. The method for manufacturing a tire according to claim 1 wherein the unvulcanized rubber composition further includes, per 100 parts by mass of the rubber component, 25 parts by mass to 50 parts by mass of carbon black.

3. The method for manufacturing a tire according to claims 1 or 2 wherein the adherend tire member and the tire member are vulcanized rubbers.

4. A tire manufactured by the method according to any of claims 1 to 3.

5. A rubber member for repair used in the method according to any of claims 1 to 3.
